# EUROPEAN PATENT APPLICATION

(11) **EP 3 489 869 A1**
(43) Date of publication of application: **29.05.2019**
(21) Application number: 17830420.0
(22) Date of filing: 14.07.2017
(51) Int. Cl.: G06Q 10/06, G06Q 40/02

(54) **MODELING METHOD AND DEVICE FOR EVALUATION MODEL**

(30) Priority: 21.07.2016 CN 201610581457
(71) Applicant: Alibaba Group Holding Limited, Grand Cayman (KY)
(72) Inventor: ZHAO, Xing, Hangzhou, Zhejiang 311121 (CN); DU, Wei, Hangzhou, Zhejiang 311121 (CN)
(74) Representative: Conroy, John
(86) International application number: PCT/CN2017/092912
(87) International publication number: WO 2018/014786

(57) **Abstract**

The present application provides a modeling method and device for an evaluation model. The method includes: separately collecting modeling samples from multiple modeling scenarios, where the modeling sample includes a scenario variable and several basic variables, and the scenario variable indicates a modeling scenario that the modeling sample belongs to; creating a modeling sample set based on the modeling samples collected from the multiple modeling scenarios; and training an evaluation model based on the modeling samples in the modeling sample set, where the evaluation model is an additive model, and the evaluation model is obtained by adding a model portion formed by basic variables and a model portion formed by scenario variables. In the present application, modeling complexity can be reduced, so that a score obtained based on the model is applicable to different service scenarios.

## Description

### TECHNICAL FIELD

The present application relates to the field of computer applications, and in particular, to a modeling method and device for an evaluation model.

### BACKGROUND

A service risk model is an evaluation model used to perform service risk evaluation. In the related technologies, a large amount of service data can usually be collected from a certain service scenario as modeling samples, and the modeling samples are classified based on whether the modeling samples include a predefined service risk event. Then, the modeling samples are trained by using a statistics collection model or a machine learning method to build a service risk model.

After the service risk model is built, target service data can be input into the service risk model to perform risk evaluation and to predict the probability of the service risk event. Then, the probability is converted into a corresponding service score, to reflect a service risk level.

However, in practice, when there are a relatively large number of service scenarios, a service score obtained by performing service risk evaluation using a service risk model built for a single scenario is usually not universal, and therefore is inapplicable to multiple different service scenarios.

### SUMMARY

The present application provides a modeling method for an evaluation model, where the method includes: separately collecting modeling samples from multiple modeling scenarios, where the modeling sample includes a scenario variable and several basic variables, and the scenario variable indicates a modeling scenario that the modeling sample belongs to; creating a modeling sample set based on the modeling samples collected from the multiple modeling scenarios; and training an evaluation model based on the modeling samples in the modeling sample set, where the evaluation model is an additive model, and the evaluation model is obtained by adding a model portion formed by basic variables and a model portion formed by scenario variables.

Optionally, the method further includes: defining a training sample weight for each modeling scenario based on a number of modeling samples in each modeling scenario, where the training sample weight is used to balance a modeling sample number difference between the modeling scenarios, and a smaller number of modeling samples in a modeling scenario indicates that a larger training sample weight is defined for the scenario.

Optionally, the method further includes: collecting target data, where the target data includes a scenario variable and several basic variables; and inputting the target data into the evaluation model to obtain a target data score, where the score is obtained by adding corresponding scores of the several basic variables in the evaluation model and a corresponding score of the scenario variable in the evaluation model.

Optionally, the method further includes: outputting a sum of the corresponding scores of the several basic variables in the evaluation model and the corresponding score of the scenario variable in the evaluation model as a score applicable to a modeling scenario that the target data belongs to, if the target data needs to be scored in the modeling scenario that the target data belongs to.

Optionally, the method further includes: outputting the corresponding scores of the several basic variables in the evaluation model as a score applicable to the multiple modeling scenarios, if the target data needs to be scored in the multiple modeling scenarios.

The present application further provides a modeling device for an evaluation model, where the device includes a collection module, configured to separately collect modeling samples from multiple modeling scenarios, where the modeling sample includes a scenario variable and several basic variables, and the scenario variable indicates a modeling scenario that the modeling sample belongs to; a creation module, configured to create a modeling sample set based on the modeling samples collected from the multiple modeling scenarios; and a training module, configured to train an evaluation model based on the modeling samples in the modeling sample set, where the evaluation model is an additive model, and the evaluation model is obtained by adding a model portion formed by basic variables and a model portion formed by scenario variables.

Optionally, the creation module is further configured to define a training sample weight for each modeling scenario based on a number of modeling samples in each modeling scenario, where the training sample weight is used to balance a modeling sample number difference between the modeling scenarios, and a smaller number of modeling samples in a modeling scenario indicates that a larger training sample weight is defined for the scenario.

Optionally, the collection module is further configured to collect target data, where the target data includes a scenario variable and several basic variables.

The device further includes a scoring module, configured to input the target data into the evaluation model, to obtain a target data score, where the score is obtained by adding corresponding scores of the several basic variables in the evaluation model and a corresponding score of the scenario variable in the evaluation model.

Optionally, the scoring module is further configured to output a sum of the corresponding scores of the several basic variables in the evaluation model and the corresponding score of the scenario variable in the evaluation model as a score applicable to a modeling scenario that the target data belongs to, if the target data needs to be scored in the modeling scenario that the target data belongs to.

Optionally, the scoring module is further configured to output the corresponding scores of the several basic variables in the evaluation model as a score applicable to the multiple modeling scenarios, if the target data needs to be scored in the multiple modeling scenarios.

In the present application, the modeling samples are separately collected from the multiple modeling scenarios, the modeling sample set is created based on the modeling samples collected from the multiple service scenarios, and the scenario variables used to indicate the modeling scenarios that the modeling samples belong to are separately defined for the modeling samples in the modeling sample set based on the original basic variables, and then the evaluation model is trained based on the modeling samples in the modeling sample set. In the present application, the modeling samples in the multiple service scenarios are merged for modeling, and the scenario variables are used for the modeling samples to distinguish between the scenarios of the modeling samples. Therefore, the final trained evaluation model is universal, and therefore a score applicable to multiple different service scenarios can be obtained by using the evaluation model.

### BRIEF DESCRIPTION OF DRAWINGS

FIG. 1 is a flowchart illustrating a modeling method for an evaluation model, according to an implementation of the present application;
FIG. 2 is a flowchart illustrating that modeling samples in multiple service scenarios are merged to train an evaluation model, according to an implementation of the present application;
FIG. 3 is a logical block diagram illustrating a modeling device for an evaluation model, according to an implementation of the present application; and
FIG. 4 is a structural diagram illustrating hardware of a serving end that includes a modeling device for an evaluation model, according to an implementation of the present application.

### DESCRIPTION OF IMPLEMENTATIONS

In practice, when service risk evaluation is performed for multiple different service scenarios, it is usually expected that a trained evaluation model is applicable to the different service scenarios.

For example, when the service is a loan service, the evaluation model can usually be a credit risk evaluation model, and the multiple different service scenarios can include different loan service scenarios such as credit card services, mortgage services, and car loan services. In this case, it is usually expected that a credit score obtained by performing service risk evaluation by using the credit risk evaluation model can be universal, and therefore the credit risk evaluation model has better performance in different scenarios such as loan services, credit card services, and consumer finance services.

In the related technologies, to resolve the previously described problem, there are usually the following modeling methods:

Method 1: A risk evaluation model can be trained based on modeling samples collected from a single service scenario, and then a score obtained by using the evaluation model is directly applied to other service scenarios. In this solution, because no other service scenario is considered during model training, the service score obtained by using the service risk model trained in the single scenario is not universal, and therefore performance of the service risk model in other service scenarios cannot be ensured.

Method 2: Evaluation models can be separately trained based on modeling samples collected from multiple different service scenarios, and service risk evaluation is separately performed by using the evaluation models trained in the service scenarios, to obtain scores. Then, weighted averaging is performed on the scores obtained by using the evaluation models. In this solution, although universality of a final score obtained through weighted averaging in multiple service scenarios is improved, more service scenarios indicates more complex model training and management because a model needs to be trained for each service scenario.

Method 3: Evaluation models can still be separately trained based on modeling samples collected from multiple different service scenarios, and then the evaluation models trained in the service scenarios are combined. In this solution, a model still needs to be trained for each service scenario, and therefore multiple models need to be maintained simultaneously. Also, more service scenarios indicate more complex model training and management. In addition, if a relatively complex modeling algorithm is used for model training, for example, a neural network algorithm is used for model training, the evaluation models trained in the service scenarios cannot be simply combined, and therefore the implementation is relatively complex.

In view of this, the present application provides a modeling method for an evaluation model:

Modeling samples are separately collected from multiple modeling scenarios, a modeling sample set is created based on the modeling samples collected from the multiple scenarios, and scenario variables used to indicate the modeling scenarios that the modeling samples belong to are separately defined for the modeling samples in the modeling sample set based on original basic variables, and then an evaluation model is trained based on the modeling samples in the modeling sample set.

In the present application, the modeling samples in the multiple scenarios are merged for modeling, and the scenario variables are used for the modeling samples to distinguish between the scenarios of the modeling samples. Therefore, the final trained evaluation model is universal, and therefore a score applicable to multiple different service scenarios can be obtained by using the evaluation model.

The following describes the present application by using specific implementations and with reference to specific application scenarios.

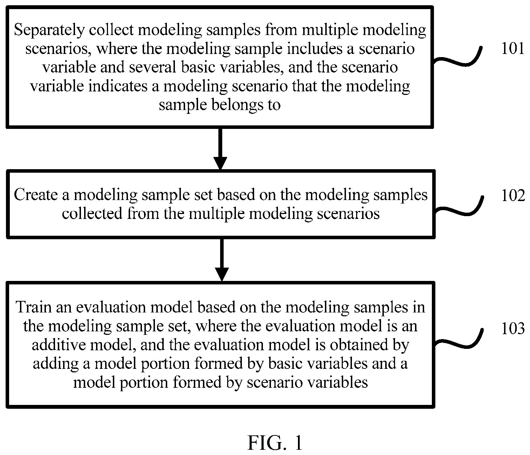

Referring to FIG. 1, FIG. 1 shows a modeling method for an evaluation model, according to an implementation of the present application. The method is applied to a serving end, and the method includes the following steps:

Step 101: Separately collect modeling samples from multiple modeling scenarios, where the modeling sample includes a scenario variable and several basic variables, and the scenario variable indicates a modeling scenario that the modeling sample belongs to.

Step 102: Create a modeling sample set based on the modeling samples collected from the multiple modeling scenarios.

Step 103: Train an evaluation model based on the modeling samples in the modeling sample set, where the evaluation model is an additive model, and the evaluation model is obtained by adding a model formed by basic variables and a model formed by scenario variables.

The serving end can include a server, a server cluster, or a cloud platform built based on a server cluster, configured to train an evaluation model.

The evaluation model is an additive model built after a large number of collected modeling samples are trained. For example, risk evaluation is performed on a user. The evaluation model can be used to perform risk evaluation on target data collected from a particular service scenario, to obtain a user score. The user score is used to measure the service risk probability in a future period of time.

For example, when the service is a loan service, the evaluation model can be a credit risk evaluation model. The credit risk evaluation model can be used to perform credit risk evaluation on a service sample collected from a particular loan service scenario, to obtain a corresponding credit score. The credit score is used to measure the credit default probability of a user in a future period of time.

In practice, the modeling sample and the target data each can include several basic variables that have relatively large impact on a service risk.

For example, when the evaluation model is a credit risk evaluation model, the basic variables included in the modeling sample and the target data can be variables that affect a credit risk. For example, the variables that affect a credit risk can include income spending data of the user, historical loan data, and the employment status of the user.

Selection of the basic variables included in the modeling sample and the target data is not limited in this example. When implementing the technical solutions described in the present application, a person skilled in the art can make references to literatures in the related technologies.

In this example, when training an evaluation model, the serving end can separately collect modeling samples from multiple service scenarios, and further use scenario variables based on original basic variables included in the modeling samples collected from the multiple different service scenarios.

Each of the multiple service scenarios can be referred to as a modeling scenario. The used scenario variables are used to indicate modeling scenarios (namely, the service scenarios) that the modeling samples belong to.

After the scenario variables are used for the modeling samples in the service scenarios, the modeling samples in the multiple different service scenarios can be merged for modeling. As such, modeling complexity can be reduced. In addition, the trained service risk model is universal, and therefore is applicable to multiple different service scenarios.

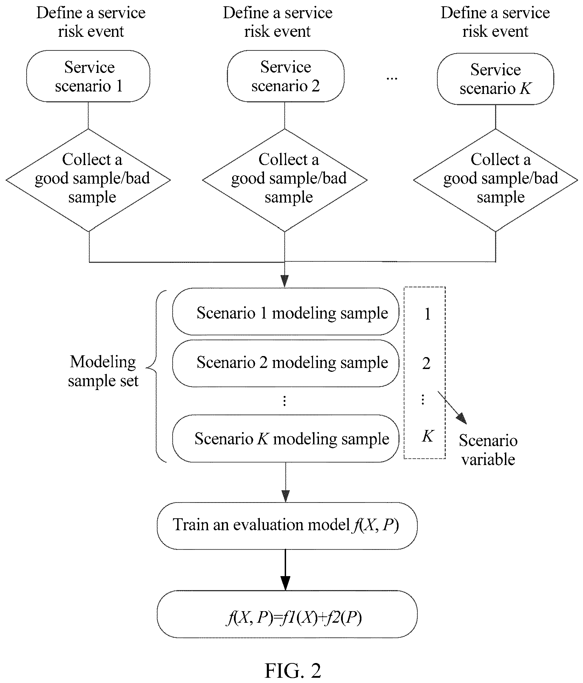

Referring to FIG. 2, FIG. 2 is a schematic diagram illustrating that modeling samples in multiple different service scenarios are merged for modeling in this example.

Risk events are separately defined for service scenarios, and risk events defined for different service scenarios can be independent of each other and different from each other.

For example, when the service is a loan service, a credit default event can usually be defined as a risk event in different loan service scenarios such as credit card services, mortgage services, and car loan services, and definitions of the credit default event in different loan scenarios can be different from each other. For example, in a credit card crediting scenario, an over-30-day deferred repayment event can be defined as the credit default event. In a mortgage crediting scenario, an over-90-day deferred repayment event can be defined as the credit default event. In a car loan crediting scenario, an over-60-day deferred repayment event can be defined as the credit default event. In other words, the credit default event can be independently defined for each loan scenario.

After the risk events are separately defined for the service scenarios, the serving end can separately collect modeling samples from the service scenarios, and classify the modeling samples collected from the service scenarios into good samples and bad samples by determining whether the collected modeling samples include the risk events that are separately defined for the service scenarios.

When the modeling samples include only good samples or bad samples, an evaluation model that is completely trained is usually not accurate enough. Therefore, the modeling samples can be enriched by classifying the collected modeling samples into the good samples and the bad samples, so that the good samples and the bad samples separately account for certain proportions of the modeling samples. This can improve accuracy of the final trained evaluation model during service risk evaluation.

In this example, after collecting a certain number of modeling samples from the service scenarios, the serving end merges the modeling samples collected from the service scenarios for model training, instead of separately performing modeling for the service scenarios.

Referring to FIG. 2, when merging the modeling samples collected from the service scenarios, the serving end can summarize the modeling samples collected from the service scenarios to generate a modeling sample set. The modeling sample set includes the modeling samples collected from the service scenarios.

The modeling sample in the modeling sample set includes a scenario variable used to indicate a modeling scenario.

In a shown implementation, the scenario variable can be specifically a quantized label value. For example, a corresponding label value can be defined for each service scenario. For example, as shown in FIG. 2, label value 1 can be defined for a modeling sample from scenario 1 to indicate that the modeling sample is from scenario 1, and label value 2 can be defined for a modeling sample from scenario 2 to indicate that the modeling sample is from scenario 2.

When the serving end defines a scenario variable for a modeling sample, in an implementation, the serving end can define a scenario variable for a modeling sample as soon as the modeling sample is collected from the service scenarios; and in another implementation, the serving end can define a scenario variable for each modeling sample in the modeling sample set after the modeling model set is generated based on the modeling samples collected from the service scenarios. Implementations are not limited in this example.

In a shown implementation, because the number of modeling samples collected by the serving end from the service scenarios may be different from each other, the serving end can define a training sample weight for each service scenario based on a number of modeling samples collected from each service scenario.

The training sample weight is used to balance a modeling sample number difference between the service scenarios. In practice, the training sample weight can be a weight value that can represent a number of modeling samples in each service scenario that need to be used when the evaluation model is trained.

The weight value can be negatively correlated to an actual number of modeling samples in each service scenario. In other words, a smaller number of modeling samples indicates that a larger training sample weight is defined.

In this case, a relatively small training sample weight can be set for a certain service scenario with a relatively large number of modeling samples. Similarly, a relatively large training sample weight can be set for a certain service scenario with a relatively small number of modeling samples.

A specific value of the training sample weight can be manually configured by a user based on an actual demand. For example, when modeling samples in multiple service scenarios are merged for centralized modeling, if the user expects that a trained model more focuses on a specified service scenario, the user can manually set a training sample weight of the service scenario to a larger value.

In this example, in a process in which the serving end reads the modeling samples from the modeling sample set to train the evaluation model, the following implementations are used to balance the modeling sample number difference between the service scenarios:

In an implementation, for a service scenario with a relatively large training sample weight, the serving end can preferentially use a modeling sample in the service scenario to participate in modeling. For a service scenario with a relatively small training sample weight, the serving end can properly control a number of used modeling samples in the service scenario based on a specific value of the weight. Therefore, a number of modeling samples that participate in modeling in the service scenario with the relatively large training sample weight tends to be consistent with a number of modeling samples that participate in modeling in the service scenario with the relatively small training sample weight.

In another implementation, for a service scenario with a relatively large training sample weight, by default, the serving end can use all modeling samples in the service scenario to participate in modeling. For a service scenario with a relatively small training sample weight, the serving end can properly repeatedly use a modeling sample in the service scenario based on a specific value of the weight. Therefore, a number of modeling samples that participate in modeling in the service scenario with the relatively large training sample weight tends to be consistent with a number of modeling samples that participate in modeling in the service scenario with the relatively small training sample weight.

As such, impact caused by the modeling sample number difference between the service scenarios on service evaluation accuracy of the final trained service risk model when the service risk model is trained can be alleviated to a maximum extent.

In this example, after the serving end generates the modeling sample set based on the modeling samples collected from the service scenarios, and separately defines the scenario variables for the modeling samples in the modeling sample set, the serving end can use the modeling samples in the modeling sample set as training samples for training based on a predetermined modeling algorithm, to build the evaluation model.

It is worthwhile to note that in practice, the evaluation model is usually an additive model (Additive Model). Therefore, a modeling method used when the serving end trains the evaluation model can be a modeling method of the additive model, for example, a score card or regression analysis.

The additive model in this implementation can usually be expressed to be obtained by adding a model portion formed by basic variables and a model portion formed by scenario variables. After the previously described target data is input into the additive model in this implementation, a corresponding score is obtained for each variable. Therefore, a score obtained by using the additive model in this implementation is usually obtained by adding a sum of corresponding scores of the target data's basic variables in the evaluation model and a corresponding score of the target data's scenario variable in the evaluation model.

Referring to FIG. 2, assume that a score obtained by training the evaluation model is *f*(*X, P*), *X* represents the basic variable, P represents the scenario variable, a corresponding score of the basic variable *X* in the model is fl(X), and a corresponding score of the scenario variable P in the model is *f2*(*P*), *f*(*X, P*) can be represented as *f1(X)*+*f2(P).*

A modeling tool used when the serving end trains the service risk model can be a relatively mature data mining tool, for example, the statistical analysis system (SAS) or statistical product and service solutions (SPSS).

In addition, in this example, details about a specific process of training the evaluation model and a process of evaluating performance of the evaluation model after the evaluation model is trained are omitted in this example. When implementing the technical solutions disclosed in the present application, a person skilled in the art can make references to literatures in the related technologies.

In this example, after the evaluation model is trained, the serving end can collect target data in real time, and perform risk evaluation by using the evaluation model.

When the serving end performs risk evaluation by using the trained evaluation model, collected target data can be service data from any service scenario, and types of variables included in the service sample need to be consistent with types of variables included in a modeling sample. In other words, the target service can also include a scenario variable and several basic variables of the same types as the variables in the modeling sample.

After collecting target data from any service scenario, the serving end can input the target data into the evaluation model, and perform risk evaluation on the target data by using the evaluation model to obtain a corresponding score. The obtained score can be obtained by adding corresponding scores of several basic variables of the target data in the evaluation model and a corresponding score of a scenario variable of the target data in the evaluation model.

In this example, the evaluation model is trained by merging the modeling samples in the service scenarios, and the scenario variables are defined for the modeling samples to distinguish between the service scenarios that the modeling samples belong to. Therefore, different service scenarios are fully considered, so that a score applicable to various different service scenarios can be obtained by performing service risk evaluation by using the evaluation model.

In a shown implementation, if the target data needs to be scored in the multiple modeling scenarios, it needs to be ensured that a score output by the evaluation model is applicable to the multiple modeling scenarios. In this case, the corresponding scores of the basic variables included in the target data in the evaluation model can be output after being added together. A score output in this case is a universal score and is applicable to the multiple different modeling scenarios, and can be used to measure the service risk probability of a user corresponding to the target data in the multiple different service scenarios. Subsequently, the output score can be used in different service scenarios to perform corresponding service procedures.

For example, when the score is a credit score, the output credit score can be separately compared with predetermined thresholds in different loan service scenarios, to determine whether a user corresponding to the credit score is a risk user, and then determine whether to lend money to the user.

It can be seen that the modeling samples in the service scenarios are merged for modeling, so that modeling complexity can be reduced, and modeling does not need to be separately performed for different service scenarios. In addition, the scenario variables are used for the modeling samples, so that the trained evaluation model is applicable to different service scenarios, and a score obtained by performing service risk evaluation by using the service evaluation model can reflect service risk levels of the same user in different service scenarios.

In this example, as previously described, the universal score applicable to the multiple different service scenarios can be obtained by using the model trained by merging the modeling samples in the service scenarios.

However, because the service risk events defined for the service scenarios may be different from each other, the score applicable to the multiple service scenarios that is obtained by performing service risk evaluation by using the evaluation model trained by merging the modeling samples in the service scenarios is usually a relative value, and cannot accurately reflect a service risk level of the same user in a specific service scenario.

In practice, the evaluation model trained by merging the modeling samples in the service scenarios needs to be applicable to different service scenarios, and usually further needs to be able to perform accurate service risk evaluation in a specific service scenario.

For example, the previously described service is a loan service, and the evaluation model is a credit risk evaluation model. Assume that there are three loan service scenarios: credit card services, mortgage services, and car loan services, the evaluation model is trained by merging modeling samples in the three loan service scenarios, and a credit score of a user is obtained by training collected target data based on the evaluation model. In this case, the credit score is a relative value applicable to different loan service scenarios such as credit card services, mortgage services, and car loan services, and cannot accurately reflect a risk level of the same user in a specific loan service scenario.

However, in practice, a user's credit level in any one of loan service scenarios such as credit card services, mortgage services, and car loan services usually further needs to be accurately evaluated. For example, statistics on a percentage of bad credits of the user needs to be accurately collected in any one of the loan service scenarios such as credit card services, mortgage services, and car loan services. In this case, the credit risk evaluation model usually needs to be able to accurately evaluate a credit level of the user in a specific scenario, to obtain a credit score corresponding to the scenario.

In a shown implementation, to enable the evaluation model trained by merging the modeling samples in the service scenarios to be compatible with the characteristic of performing accurate service risk evaluation in a specific service scenario, if the target data needs to be scored in a modeling scenario that the target data belongs to, a score output by the evaluation model usually does not need to be universal, provided that the score is applicable only to the modeling scenario that the target data belongs to. In this case, the corresponding scores of the basic variables included in the target data in the evaluation model and the corresponding score of the scenario variable included in the target data in the evaluation model can be added, and then a sum of the scores can be output. The sum of the scores that is output in this case is a scenario score corresponding to the target data. The score is not universal, and therefore is applicable only to the service scenario that the target data actually belongs to.

It can be seen that as such, when certain target data needs to be scored in a service scenario that the target data actually belongs to, a score applicable to the service scenario that the target data actually belongs to can be obtained only by outputting a sum of corresponding scores of basic variables and a corresponding score of a scenario variable, without separately performing modeling for the service scenario.

The following describes in detail the technical solutions in the previously described implementations with reference to application scenarios of credit risk evaluation.

In this example, the service can be a loan service, the evaluation model can be a credit risk evaluation model, and the score can be a credit score obtained after credit risk evaluation is performed on a collected service sample of a user by using the credit risk evaluation model. The multiple service scenarios can include three loan service scenarios: credit card services, mortgage services, and car loan services.

In an initial state, credit default events can be separately defined for the loan service scenarios. For example, in a credit card crediting scenario, an over-30-day deferred repayment event can be defined as the credit default event. In a mortgage crediting scenario, an over-90-day deferred repayment event can be defined as the credit default event. In a car loan crediting scenario, an over-60-day deferred repayment event can be defined as the credit default event. In other words, the credit default event can be independently defined for each loan scenario.

When collecting modeling samples from the loan service scenarios, the serving end can classify the collected modeling samples into good samples and bad samples based on the credit default events defined for the scenarios. The modeling sample can include variables that affect a credit risk, such as income spending data, historical loan data, and the employment status of a user.

After collecting the modeling samples, the serving end can summarize the modeling samples collected from the loan service scenarios to generate a modeling sample set, and separately define scenario variables for the modeling samples in the modeling sample set based on original basic variables of the modeling samples, to indicate the loan service scenarios that the modeling samples belong to.

When training the credit risk evaluation model, the serving end can merge the modeling samples collected from the scenarios, and train the credit risk evaluation model based on all the modeling samples included in the modeling sample set.

A relatively mature data mining tool, for example, the SAS or SPSS, and a modeling method of an additive model, for example, a score card or regression analysis can be used to complete model training. Details about a specific model training process are omitted in this example.

After the credit risk evaluation model is trained, the serving end can collect target data from any loan service scenario such as credit card services, mortgage services, or car loan services. The collected target data can still include several basic variables and a scenario variable. After the target data is collected, credit scoring can be performed on the target data by using the credit risk evaluation model. Because the credit risk evaluation model is trained by merging the modeling samples in the loan service scenarios such as credit card services, mortgage services, and car loan services, a credit score applicable to multiple loan service scenarios such as credit card services, mortgage services, and car loan services can be obtained by using this model.

Assume that the target data is service data from a specific loan service scenario (credit card), if credit scoring needs to be performed on the target data in the specific loan service scenario (credit card), the serving end can add corresponding credit scores of the several basic variables of the target data in the model and a score of the scenario variable of the target data in the model, and then output a sum of the scores to a user corresponding to the target data as a credit score of the user. The score output in this case is not universal, and therefore is applicable only to the loan service scenario (credit card).

In addition, if credit scoring needs to be performed on the target data in multiple loan service scenarios such as credit card services, mortgage services, and car loan services, the serving end can output corresponding credit scores of the several basic variables of the target data in the model to a user corresponding to the target data as a credit score of the user. The score output in this case is universal, and therefore is applicable to the multiple loan service scenarios such as credit card services, mortgage services, and car loan services.

It can be seen from the previously described implementations that in the present application, the modeling samples are separately collected from the multiple modeling scenarios, the modeling sample set is created based on the modeling samples collected from the multiple service scenarios, and the scenario variables used to indicate the modeling scenarios that the modeling samples belong to are separately defined for the modeling samples in the modeling sample set based on the original basic variables, and then the evaluation model is trained based on the modeling samples in the modeling sample set.

In the present application, the modeling samples in the multiple service scenarios are merged for modeling, and the scenario variables are used for the modeling samples to distinguish between the scenarios of the modeling samples. Therefore, the final trained evaluation model is universal, and therefore a score applicable to multiple different service scenarios can be obtained by using the evaluation model.

If scoring needs to be performed in the service scenario that the target data belongs to, the sum of the corresponding scores of the several basic variables included in the target data in the model and the corresponding score of the scenario variable included in the target data in the model can be output as the score applicable to the service scenario that the target data belongs to.

In addition, if scoring needs to be performed in the multiple service scenarios, the corresponding scores of the several basic variables included in the training data in the model can be output as the score applicable to the multiple different service scenarios. Therefore, the model can output not only the universal score but also the score applicable to the service scenario that the target data actually belongs to. As such, scores are more flexibly output and are applicable to different scoring scenarios.

Corresponding to the previously described method implementations, the present application further provides a device implementation.

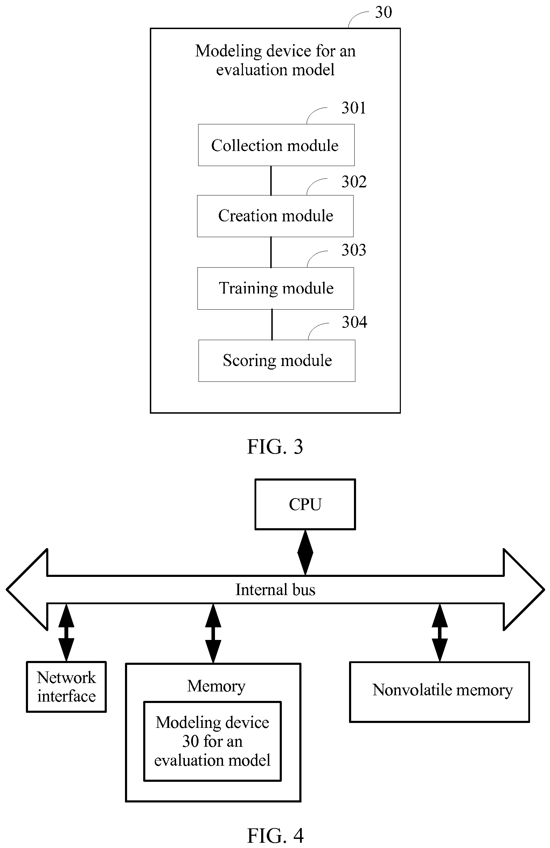

Referring to FIG. 3, the present application provides a modeling device 30 for an evaluation model, applied to a serving end. Referring to FIG. 4, a hardware architecture of a serving end that includes the modeling device 30 for an evaluation model generally includes a CPU, a memory, a nonvolatile memory, a network interface, an internal bus, etc. For example, during software implementation, the modeling device 30 for an evaluation model can usually be understood as a logical device with a combination of software and hardware that is formed after a computer program loaded in the memory runs on the CPU. The device 30 includes a collection module 301, configured to separately collect modeling samples from multiple modeling scenarios, where the modeling sample includes a scenario variable and several basic variables, and the scenario variable indicates a modeling scenario that the modeling sample belongs to; a creation module 302, configured to create a modeling sample set based on the modeling samples collected from the multiple modeling scenarios; and a training module 303, configured to train an evaluation model based on the modeling samples in the modeling sample set, where the evaluation model is an additive model, and the evaluation model is obtained by adding a model portion formed by basic variables and a model portion formed by scenario variables.

In this example, the creation module 302 is further configured to define a training sample weight for each modeling scenario based on a number of modeling samples in each modeling scenario, where the training sample weight is used to balance a modeling sample number difference between the modeling scenarios, and a smaller number of modeling samples in a modeling scenario indicates that a larger training sample weight is defined for the scenario.

In this example, the collection module 301 is further configured to collect target data, where the target data includes a scenario variable and several basic variables.

The device 30 further includes a scoring module 304, configured to input the target data into the evaluation model, to obtain a target data score, where the score is obtained by adding corresponding scores of the several basic variables in the evaluation model and a corresponding score of the scenario variable in the evaluation model.

In this example, the scoring module 304 is further configured to output a sum of the corresponding scores of the several basic variables in the evaluation model and the corresponding score of the scenario variable in the evaluation model as a score applicable to a modeling scenario that the target data belongs to, if the target data needs to be scored in the modeling scenario that the target data belongs to.

In this example, the scoring module 304 is further configured to output the corresponding scores of the several basic variables in the evaluation model as a score applicable to the multiple modeling scenarios, if the target data needs to be scored in the multiple modeling scenarios.

A person skilled in the art can easily figure out other implementation solutions of the present application after considering the specification and practicing the present application disclosed here. The present application is intended to cover any variations, functions, or adaptive changes of the present application. These variations, functions, or adaptive changes comply with general principles of the present application, and include common knowledge or a commonly used technical means in the technical field that is not disclosed in the present application. The specification and the implementations are merely considered as examples, and the actual scope and the spirit of the present application are described in the following claims.

It is worthwhile to understand that the present application is not limited to the previously described accurate structures shown in the accompanying drawings, and various modifications and changes can be made to the present application without departing from the scope of the present application. The scope of the present application is limited only by the appended claims.

The previous descriptions are merely example implementations of the present application, but are not intended to limit the present application. Any modification, equivalent replacement, improvement, etc. made without departing from the spirit and principle of the present application should fall within the protection scope of the present application.

## Claims

1. A modeling method for an evaluation model, wherein the method comprises:
separately collecting modeling samples from multiple modeling scenarios, wherein the modeling sample comprises a scenario variable and several basic variables, and the scenario variable indicates a modeling scenario that the modeling sample belongs to;
creating a modeling sample set based on the modeling samples collected from the multiple modeling scenarios; and
training an evaluation model based on the modeling samples in the modeling sample set, wherein the evaluation model is an additive model, and the evaluation model is obtained by adding a model portion formed by basic variables and a model portion formed by scenario variables.

2. The method according to claim 1, wherein the method further comprises:
defining a training sample weight for each modeling scenario based on a number of modeling samples in each modeling scenario, wherein the training sample weight is used to balance a modeling sample number difference between the modeling scenarios, and a smaller number of modeling samples in a modeling scenario indicates that a larger training sample weight is defined for the scenario.

3. The method according to claim 1, wherein the method further comprises:
collecting target data, wherein the target data comprises a scenario variable and several basic variables; and
inputting the target data into the evaluation model, to obtain a target data score, wherein the score is obtained by adding corresponding scores of the several basic variables in the evaluation model and a corresponding score of the scenario variable in the evaluation model.

4. The method according to claim 3, wherein the method further comprises:
outputting a sum of the corresponding scores of the several basic variables in the evaluation model and the corresponding score of the scenario variable in the evaluation model as a score applicable to a modeling scenario that the target data belongs to, if the target data needs to be scored in the modeling scenario that the target data belongs to.

5. The method according to claim 4, wherein the method further comprises:
outputting the corresponding scores of the several basic variables in the evaluation model as a score applicable to the multiple modeling scenarios, if the target data needs to be scored in the multiple modeling scenarios.

6. A modeling device for an evaluation model, wherein the device comprises:
a collection module, configured to separately collect modeling samples from multiple modeling scenarios, wherein the modeling sample comprises a scenario variable and several basic variables, and the scenario variable indicates a modeling scenario that the modeling sample belongs to;
a creation module, configured to create a modeling sample set based on the modeling samples collected from the multiple modeling scenarios; and
a training module, configured to train an evaluation model based on the modeling samples in the modeling sample set, wherein the evaluation model is an additive model, and the evaluation model is obtained by adding a model portion formed by basic variables and a model portion formed by scenario variables.

7. The device according to claim 6, wherein the creation module is further configured to:
define a training sample weight for each modeling scenario based on a number of modeling samples in each modeling scenario, wherein the training sample weight is used to balance a modeling sample number difference between the modeling scenarios, and a smaller number of modeling samples in a modeling scenario indicates that a larger training sample weight is defined for the scenario.

8. The device according to claim 6, wherein the collection module is further configured to:
collect target data, wherein the target data comprises a scenario variable and several basic variables; and
the device further comprises:
a scoring module, configured to input the target data into the evaluation model, to obtain a target data score, wherein the score is obtained by adding corresponding scores of the several basic variables in the evaluation model and a corresponding score of the scenario variable in the evaluation model.

9. The device according to claim 8, wherein the scoring module is further configured to:
output a sum of the corresponding scores of the several basic variables in the evaluation model and the corresponding score of the scenario variable in the evaluation model as a score applicable to a modeling scenario that the target data belongs to, if the target data needs to be scored in the modeling scenario that the target data belongs to.

10. The device according to claim 9, wherein the scoring module is further configured to:
output the corresponding scores of the several basic variables in the evaluation model as a score applicable to the multiple modeling scenarios, if the target data needs to be scored in the multiple modeling scenarios.
